**Europäisches Patentamt**

**European Patent Office**

**Office européen des brevets**

(19)

(11) Veröffentlichungsnummer: **0 280 098 B1**

## (12) EUROPÄISCHE PATENTSCHRIFT

(45) Veröffentlichungstag der Patentschrift: **02.12.92**

(51) Int. Cl.5: **A23L 1/318**, A23B 4/044

(21) Anmeldenummer: **88101719.8**

(22) Anmeldetag: **06.02.88**

(54) **Behandlungsraum für die Trocknung bzw. Reifung von Feuchtigkeit abgebenden Nahrungsmitteln.**

(30) Priorität: **09.02.87 AT 257/87**

(43) Veröffentlichungstag der Anmeldung:
**31.08.88 Patentblatt 88/35**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**CH-A- 603 060**
**FR-A- 1 122 136**

(73) Patentinhaber: **Handl, Karl**
**Hauptstrasse 33**
**A-6551 Pians(AT)**

(84) Benannte Vertragsstaaten:
**BE ES FR GB GR LU NL SE**

(73) Patentinhaber: **Höllrigl, Ortwin**
**Dr. Stumpfstrasse 42**
**A-6020 Innsbruck(AT)**

(84) Benannte Vertragsstaaten:
**CH DE IT LI AT**

(72) Erfinder: **Handl, Karl**
**Hauptstrasse 33**
**A-6551 Pians(AT)**
Erfinder: **Höllrigl, Ortwin**
**Dr. Stumpfstrasse 42**
**A-6020 Innsbruck(AT)**

(74) Vertreter: **Torggler, Paul, Dr. et al**
**Wilhelm-Greil-Strasse 16**
**A-6020 Innsbruck(AT)**

## Beschreibung

Die Erfindung betrifft einen Behandlungsraum für die Trocknung bzw. Reifung von Feuchtigkeit abgebenden Nahrungsmitteln, insbesondere Fleischerzeugnissen, die einer ungesättigten Luftströmung ausgesetzt sind, die durch am Boden verteilte Lufteintrittsöffnungen eintritt und durch obere Luftaustrittsöffnungen abzieht.

Ein Behandlungsraum dieser Art ist beispielsweise der CH-A-603060 zu entnehmen. Diese zeigt einen tunnelförmigen Behandlungsraum, dessen Boden durch ein tragfähiges grobes Gitter gebildet wird, unter dem der Luftzuführkanal verläuft. Die aufsteigende Luft tritt im gewölbten Deckenbereich großflächig in einen Abluftkanal und wird wieder unter den Boden eingespeist. Das Bodengitter enthält Schienen für Transportwagen, auf denen das zu behandelnde Gut durch den Behandlungsraum gefahren wird.

Die Luftzuführung erfolgt somit durch eine Vielzahl von bodenseitigen Eintrittsöffnungen, wodurch eine großräumige Wirbelbildung unterbunden wird. Da die Zuluft das vom Behandlungsgut abgegebene Wasser aufnehmen soll, ist sie ungesättigt und dadurch schwerer als die feuchtere Abluft, sodaß sich auf Grund der unterschiedlichen Dichte eine vertikale Aufwärtsströmung einstellt. Die Luft steigt infolgedessen zur Decke des Behandlungsraumes auf, an der sie austreten kann. Je gleichmäßiger die Zuluft aus den Eintrittsöffnungen austreten oder ohne tote Winkel einer Vielzahl von parallelen Strömungswegen folgen kann, desto höher ist die Qualität der getrockneten bzw. gereiften Produkte.

Unterschiedliche Trocknungsgeschwindigkeiten führen zu Qualitätsverlusten der Produkte. So bewirkt etwa bei Speck eine zu rasche Trocknung eine Verhärtung der Randzonen, während zu geringe Belüftung die Feuchtigkeitsabgabe beinträchtigt.

Es hat sich gezeigt, daß sehr geringe Strömungsgeschindigkeiten (zwischen 0,01 und 0,5 m/sec) die besten Trocknungsergebnisse bewirken. Die Strömungsgeschwindigkeit sollte dabei annähernd so groß sein, daß die Luft gerade jene Feuchtigkeit aufnehmen kann, die eine ungestörte kapillare Wasserbewegung im Behandlungsgut an der Oberfläche abgibt. Der in der CH-A-603060 beschriebene Gitterboden ist zu grobmaschig, um die Forderung der Feinstverteilung zu erfüllen. Feinmaschigere Gitter würden aber durch das Begehen leicht verschmutzen und verstopfen, sodaß die Gleichmäßigkeit der Luftströmung ebenfalls nicht mehr gegeben ist.

Die Erfindung hat es sich nun zur Aufgabe gestellt, einen Behandlungsraum zu schaffen, in dem eine äußerst gleichmäßige Luftverteilung und Luftströmung erzielt wird, die auch nach oftmaligem Begehen erhalten bleibt.

Erfindungsgemäß wird dies dadurch erreicht, daß die Lufteintrittsöffnungen durch die Umfangsöffnungen von mehreren Gewebeschläuchen gebildet sind, die mit Abstand zueinander und zum Boden aufgehängt sind und sich über dessen Länge oder Breite erstrecken.

Es hat sich gezeigt, daß trotz des nicht vollflächigen Luftaustritts jene gewünschte, äußerst gleichmäßige Luftverteilung erreicht wird, die die geringe Strömungsgeschwindigkeit erlaubt. So bewähren sich etwa feinste Gewebe, die pro m$^2$ einen stündlichen Luftdurchsatz von 250 m$^3$ bei einem Druckabfall von 120 Pa ermöglichen. Beispielsweise können die Schläuche einen Durchmesser von 10 bis 20 cm aufweisen und in einem Abstand von 30 bis 60 cm zueinander und in einem Abstand von 5 bis 20 cm zum Boden aufgehängt sein, sodaß in den Zwischenräumen der Boden des Behandlungsraumes ungehindert und ohne Verschmutzungsgefahr der Lufteintrittsöffnungen begehbar ist. Je nach Dimensionierung des Behandlungsraumes und der Gewebeschläuche kann die Bodenfreiheit der Transportwagen zu gering sein, sodaß in einer Ausführung auch vorgesehen sein kann, daß die Fahrspuren über die Aufhängung der Schläuche hochgeständerte Schienen aufweisen. Die Schläuche erstrecken sich damit in jedem Fall unterhalb der einfahrenden Transportwägen, und zwischen jedem Paar von Fahrspuren bleibt die Gehspur auf dem Boden unverändert erhalten. Die Feinstverteilung der Zuluft führt dabei trotz der nicht parallelen Austrittsrichtungen zu einer praktisch verwirbelungsfreien Luftströmung mit sehr geringer Geschwindigkeit, wobei ausschließlich die Transportwägen die unvermeidlichen Störungen verursachen, nicht jedoch die Anordnung und Verteilung der Lufteintrittsöffnungen im gesamten Behandlungsraum. Ein für den Durchsatz erforderliches Gebläse beeinflußt ebenfalls nur die Strömungsgeschwindigkeit, jedoch nicht die Strömungsrichtung.

Der Behandlungsraum läßt sich weiters auch als Räucherraum verwenden, wobei bevorzugt eigene Raucheinlaß- und -auslaßöffnungen vorgesehen sind.

Nachstehend wird nun die Erfindung an Hand der Figuren der beiliegenden Zeichnung näher beschrieben.

Es zeigen:

Fig. 1 einen Vertikalschnitt durch einen Behandlungsraum, und

Fig. 2 vergrößert das Detail II aus Fig. 1.

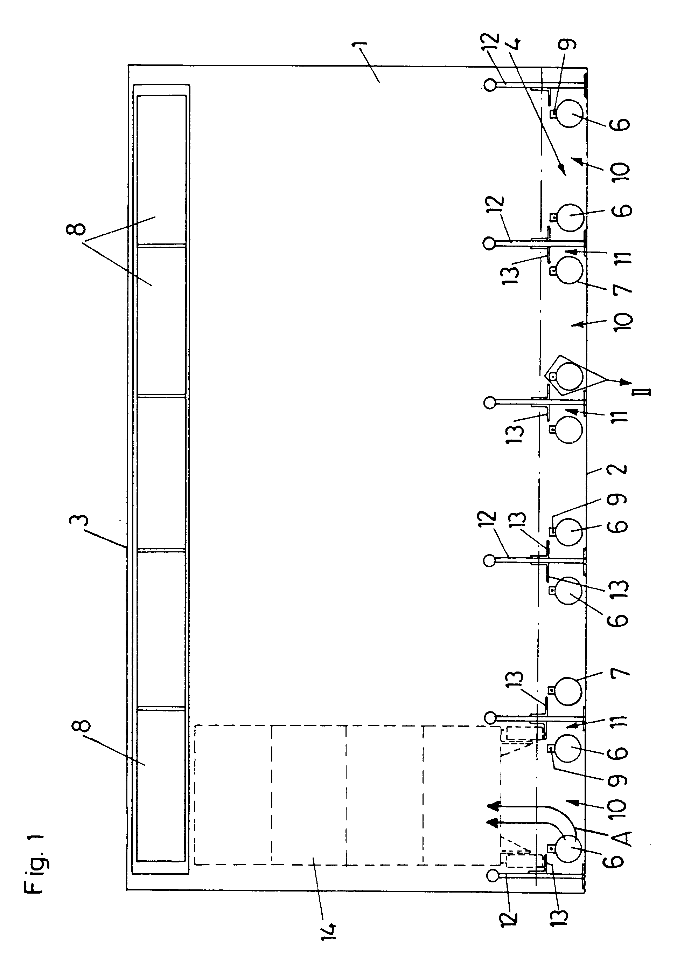

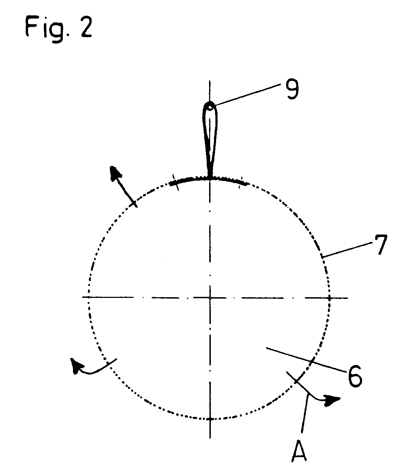

Ein Behandlungsraum 1 weist eine Bodenfläche 2 auf, die beispielsweise zwischen 50 und 150 m$^2$ umfaßt. Das zu behandelnde Gut, insbesondere Fleischereierzeugnisse, wie Speck usw. wird auf Transportwägen 14 aufgehängt in den Behandlungsraum 1 gebracht, in dem es z.B. drei bis vier Wochen einer Luftströmung (Pfeile A) ausgesetzt wird, die die vom Behandlungsgut zu entziehende bzw. abgegebene Feuchtigkeit aufnimmt und abtransportiert. Lufteintrittsöffnungen 7 sind in einer Randzone 4 über der Bodenfläche 2 verteilt. Die Randzone 4 ist vom Behandlungsraum 1 nicht körperlich abgeteilt, sondern umfaßt eine die Luftzufuhr ermöglichende Höhe über der Bodenfläche 2. In Fig. 1 ist die Randzone 4 jedoch zur Veranschaulichung durch eine gedachte, strichpunktierte Trennlinie dargestellt. Die Lufteintrittsöffnungen 7 sind durch Umfangsöffnungen von Schläuchen 6 gebildet, die aus einem luftdurchlässigen Gewebe geringer Maschenweite bestehen und einen Durchmesser von beispielsweise 15 cm aufweisen. Die aus den Schläuchen 6 austretende trockene Luft weist eine geringe Strömungsgeschwindigkeit von etwa 0,01 bis 0,5 m/sec auf, sodaß trotz der rundum gerichteten Luftaustrittsöffnungen 7 (Fig. 2) oberhalb der Randzone 4 eine gleichmäßige Aufwärtsströmung gegeben ist, die weder Zonen mit zu großer noch mit zu geringer Strömungsgeschwindigkeit bildet.

Die Schläuche 6 sind mit Abstand zur Bodenfläche 2 an einer Aufhängung 9 befestigt, die etwa aus einem gespannten Draht besteht, der Schlaufen der Schläuche 6 durchsetzt. Die Schläuche 6 sind stirnseitig an einen Luftzufuhrkanal angeschlossen und am anderen Ende verschlossen.

Die Luft tritt über Austrittsöffnungen 8 im Bereich der Decke 3 aus, die nur schematisch gezeigt sind. Die Luftaustrittsöffnungen 8 können auch durch Maschenöffnungen gebildet sein, wenn ein entsprechendes Gewebe unterhalb der Decke 3 gespannt ist. Um trotz der über der Bodenfläche 2 aufgehängten Schläuche 6 den Behandlungsraum 1 befahren und begehen zu können, sind Fahrspuren 11 für die Transportwägen 14 vorgesehen. Diese werden durch Stützen 12 und daran befestigten Schienen 13 gebildet, wobei in der Raummitte angeordnete Stützen 12 beidseitig je eine Schiene 13 tragen. Die Fahrebene liegt damit über der Aufhängung 9 für die Schläuche 6 etwa in der Höhe der gedachten Trennebene der Randzone 4, oberhalb der die parallele Aufwärtsbewegung der Zuluft im wesentlichen gewährleistet ist. Zwischen den Fahrspuren 11 befinden sich Gehspuren 10, um das händische Schieben einzelner Transportwägen 14 zu ermöglichen. Soll der Behandlungsraum 1 auch als Räucherkammer verwendet werden, so sind bevorzugt eigene, nicht gezeigte Raucheinlaßöffnungen in der Randzone 4 und Rauchauslaßöffnungen im Deckenbereich vorgesehen. Es ist aber ebenso denkbar, auch den Rauch über die Öffnungen 7 und 8 des Luftsystems ein- und ausströmen zu lassen.

Da die Luft durch Feuchtigkeitsaufnahme leichter wird, entspricht die Strömungsrichtung A der natürlichen Luftbewegung, sodaß das Gebläse nur zur Erhöhung der Strömungsgeschwindigkeit, nicht jedoch zur Einhaltung einer Strömungsrichtung benötigt wird. Da auch ohne Gebläseunterstützung ein beträchtlicher Luftdurchsatz pro Stunde gegeben ist, wird ein energiesparender Betrieb des Behandlungsraumes erreicht, und Produkte hoher Qualität werden erzielt.

## Patentansprüche

1. Behandlungsraum für die Trocknung bzw. Reifung von Feuchtigkeit abgebenden Nahrungsmitteln, insbesondere Fleischereierzeugnissen, die einer ungesättigten, im wesentlichen vertikalen Luftströmung ausgesetzt sind, die durch am Boden verteilte Lufteintrittsöffnungen eintritt und durch obere Luftaustrittsöffnungen abzieht, dadurch gekennzeichnet, daß die Lufteintrittsöffnungen (7) durch die Umfangsöffnungen von mehreren Gewebeschläuchen gebildet sind, die mit Abstand zueinander und zum Boden aufgehängt sind und sich über dessen Länge oder Breite erstrecken.

2. Behandlungsraum nach Anspruch 1, bei dem auf dem Boden Geh- oder Fahrspuren vorgesehen sind, dadurch gekennzeichnet, daß die Fahrspuren (11) über die Aufhängung (9) der Schläuche (6) hochgeständerte Schienen (13) aufweisen.

## Claims

1. A treatment chamber for the drying or maturing of foodstuffs which give off moisture, in particular butcher's products, which are exposed to an unsaturated, substantially vertical air flow which enters through air intake openings which are distributed at the bottom and which escapes through upper air outlet openings, characterised in that the air intake openings (7) are formed by the peripheral openings of a plurality of fabric hoses which are suspended at a spacing relative to each other and relative to the bottom and which extend over the length or width thereof.

2. A treatment chamber according to claim 1 wherein provided on the bottom are paths for walking or travelling upon characterised in that the travel paths (11) have rails (13) which are raised above the suspension means (9) of the hoses (6).

## Revendications

1. Chambre de traitement pour le séchage ou la maturation d'aliments dégageant de l'humidité, en particulier des produits de boucherie, qui sont exposés à un courant d'air non saturé sensiblement vertical entrant par des orifices d'admission d'air répartis au niveau du sol et sortant par des orifices d'évacuation d'air supérieurs, caractérisée en ce que les orifices d'admission d'air (7) sont définis par les orifices périphériques de plusieurs tuyaux en tissu qui sont suspendus suivant un certain espacement les uns par rapport aux autres et par rapport au sol, et s'étendent sur la longueur ou sur la longueur de celui-ci.

2. Chambre de traitement selon la revendication 1, pour laquelle il est prévu, sur le sol, des voies de circulation pour personnes ou véhicules, caractérisée en ce que les voies de circulation (11) pour véhicules possèdent des rails (13) surélevés au-dessus de la suspension (9) des tuyaux (6).

EP 0 280 098 B1

Fig. 1

5

Fig. 2